# EUROPÄISCHE PATENTANMELDUNG

(11) **EP 0 762 115 A1**
(43) Veröffentlichungstag der Anmeldung: **12.03.1997**
(21) Anmeldenummer: 96810509.8
(22) Anmeldetag: 30.07.1996
(51) Int. Cl.: G01N 25/14

(54) **Verfahren zum Bestimmen des Fettgehaltes von organischen Proben**

(30) Priorität: 04.09.1995 CH 2507/95
(71) Anmelder: Büchi Labortechnik AG, CH-9230 Flawil (CH)
(72) Erfinder: Caviezel, Rafael, c/o Büchi Labortechnik AG, 9230 Flawil (CH)
(74) Vertreter: Hepp, Dieter

(57) **Zusammenfassung**

In einem Verfahren zur Bestimmung des Fettgehaltes werden die Fettanteile der Probe mittels Extraktion herausgelöst. Zum Extrahieren wird ein hochsiedendes Lösungsmittel verwendet. Durch die Verwendung eines solchen hochsiedenden Lösungsmittels werden möglichst alle Fettanteile herausgelöst und die Extraktionszeit wird deutlich verkürzt. Gleichzeitig zur Extraktion werden die extrahierten Fettanteile durch die Beigabe einer Base verseift. Dadurch entstehen die Salze der Fettsäuren, welche in der Probe enthalten waren. In weiteren Verfahrensschritte werden diese Salze der Fettsäuren weiterbehandelt, voneinander getrennt und analysiert. Die Methode ermöglicht die genaue Bestimmung des Fettgehaltes von organischen Proben aufgrund der in der Probe enthaltenen Fettsäuren.

## Beschreibung

Die Erfindung betrifft ein Verfahren zum Bestimmen des Fettgehaltes von organischen Proben, beispielsweise Lebensmitteln. Aufgrund der Kennzeichnungspflicht bei Lebensmitteln kommt der Bestimmung des Fettgehaltes eine wachsende Bedeutung zu. Aus ernährungsphysiologischer Sicht ist die Bestimmung der Gesamtheit der Fettsäuren, die sich in einem Nahrungsmittel befinden von Interesse. Nur eine Bestimmung des Fettgehaltes auf der Basis von Fettsäuren ermöglicht eine aussagekräftige Bestimmung des Fett-Kalorienwerts von Nahrungsmitteln.

Allgemein bekannt sind Fettbestimmungsmethoden, welche auf einer Extraktion des Fettes aus der Probe mit Hilfe eines organischen Lösungsmittels beruhen. Hier kann beispielsweise die direkte Extraktionsmethode nach Soxhlet genannt werden. Bekannt ist es auch, die Extraktion erst nach einem Aufschluss mit einer Säure oder mit einer Base durchzuführen (Weibull-Stoldt, Röse-Gottlieb). Alle diese klassischen Methoden weisen verschiedene Nachteile auf. Meist sind sie relativ kompliziert und zeitaufwendig in ihrer Anwendung und eignen sich nur zur Bestimmung des Fettgehaltes von einer bestimmten Art von Probe. Ein allen diesen bekannten Methoden gemeinsamer Nachteil ist, dass das Fett nicht auf der Basis von Fettsäuren bestimmt wird. Dadurch lassen sich aus ernährungsphysiologischer Sicht keine aussagekräftigen Resultate ziehen.

Bekannt sind auch Verfahren, bei welchem der aus der Probe extrahierte Fettanteil durch Verseifen und anschliessendes Ansäuern in die dem Fett entsprechenden Fettsäuren zerlegt wird. Diese Fettsäuren werden verestert und chromatographisch bestimmt. Auf diese Weise kann der Anteil einer jeden Fettsäure am gesamten Fettgehalt bestimmt werden. Der Nachteil dieser Methode ist, dass zur Durchführung viele Arbeitsschritte notwendig sind und dass sich dadurch eine lange Bestimmungszeit ergibt. Ausserdem ist es für die Bestimmung des Gesamtfettgehalts von Lebensmitteln nicht Bedingung, die Verteilung der einzelnen Fettsäuren zu kennen. Ausserdem werden bei diesem bekannten Extraktionsverfahren die Fette nicht selektiv aus der Probe extrahiert.

Die Erfindung stellt sich also die Aufgabe, die erwähänten Nachteile zu vermeiden, insbesondere also ein Verfahren zum Bestimmen des Fettgehaltes zu schaffen, welches schnell und zuverlässig durchführbar ist und welches eine Fettbestimmung ausgehend von der Gesamtheit aller in der Probe enthaltenen Fettsäuren ermöglicht. Erfindungsgemäss wird diese Aufgabe mit einem Verfahren gemäss Anspruch 1 gelöst.

Das Fett der Probe wird mit einem hochsiedenden, relativ polaren Lösungsmittel extrahiert. Hochsiedend bedeutet, dass das Lösungsmittel einen im Vergleich zu herkömmlichen Extraktionsmitteln hohen Siedepunkt aufweist und dadurch die Gesamtheit aller in der Probe enthaltenen Fette extrahiert. Durch die Wahl eines solchen Lösungsmittels wird zusätzlich erreicht, dass die Extraktionszeit deutlich reduziert wird.

Gleichzeitig wird das extrahierte Fett mit Hilfe einer Base verseift. Dabei entstehen die Salze der Fettsäuren. Eine Probe des so erhaltenen Reaktionsproduktes kann analysiert werden, wodurch eine aus ernährungsphysiologischer Sicht aussagekräftige Bestimmung des Fettgehaltes der ursprünglichen organischen Probe möglich ist.

Durch das Beigeben einer wässrigen, sauren Salzlösung ergibt sich eine Trennung des Reaktionsprodukts in eine wässrige und in eine darüber liegende organische Phase, welche die freien Fettsäuren enthält. Zum Analysieren des Reaktionsprodukts und zum Bestimmen des gesamten Gehalts an Fettsäuren wird eine Probe aus der organischen Schicht entnommen.

Eine vorteilhafte Analysenmethode des Reaktionsproduktes ergibt sich, wenn die einzelnen Bestandteile des Reaktionsprodukts zu einer nachfolgenden, selektiven Analyse voneinander getrennt werden. Dies ist einerseits nötig, um die Fettsäuren vom Lösungsmittel zu trennen und bietet anderseits auch den Vorteil, dass die einzelnen Fettsäuren sich voneinander und von anderen, unerwünschten Komponenten trennen. Durch die Verwendung eines relativ polaren, hochsiedenden Lösungsmittels werden auch Teile aus der Probe extrahiert, welche nicht zu den eigentlichen Fetten gehören. Dies können höhere Fettalkohole, Farbstoffe oder Produkte sein, die erst während der Extraktionsreaktion entstehen. Eine Miterfassung dieser Stoffe beim Analyseverfahren würde das Messresultat verfälschen.

Bevorzugt werden die verschiedenen Bestandteile des Reaktionsproduktes mittels Gas-Chromatographie getrennt. Da es nicht ein Ziel der Erfindung ist, die einzelnen Fettsäuren, sondern die Gesamtheit aller Fettsäuren einer Probe zu bestimmen, kann ein Gas-Chromatograph mit einer Vergleichsweise kurzen Trennsäule verwendet werden, typischerweise mit einer Länge von 30 cm. Durch die Wahl einer solchen kurzen Trennsäule werden die für die chromatographische Trennung notwendigen Zeiten beträchtlich verringert.

Zum Dektektieren der verschiedenen durch das Trennverfahren erhaltenen Bestandteile wird vorzugsweise ein Flammenionisationsdetektor (FID) verwendet.

Zum quantitativen Bestimmen des Fettgehaltes der Probe wird vor der Extraktion ein interner Standard zu der Probe gegeben. Ein interner Standard ist eine Fettsäure, welche in natürlichen Fetten nicht vorkommt, beispielsweise Tridecansäure (C13-Säure), welche aber vorteilhafterweise bezüglich der Detektion mit einem FID ein analoges Verhalten aufweist, wie die natürlichen Fettsäuren. Wenn eine genau bekannte Menge des internen Standards vor der Extraktion zu der organischen Probe beigemischt wird, kann der bekannte interne Standard auf der spektralen Verteilung der Fettsäuren bestimmt werden. Der interne Standard ist also eine Fettsäure, welche zur Kalibrierung der Messung dient und welche eine quantitative Bestimmung der Fettsäuren der Probe erlaubt.

Als Lösungsmittel zum Extrahieren des Fetts aus der organischen Probe wird vorzugsweise Butanol verwendet. Butanol hat einen Siedepunkt von ca. 117°C.

Vorzugsweise liegt der Siedepunkt in jedem Fall zwischen 110°C und 120°C.

Als Base zum Verseifen der herausgelösten Fettanteile wird vorzugsweise Kaliumhydroxyd verwendet. Denkbar ist aber auch die Verwendung von Natriumhydroxid.

Zum Ansäuern der verseiften Fette wird vorzugsweise eine wässrige Lösung mit Natriumdihydrogenphosphat und Ameisensäure verwendet.

Die Extraktion der Probe erfolgt in einem geeigneten Extraktionsgefäss. Dabei kann die Probe direkt in das Lösungsmittel gegeben werden. Im Extraktionsgefäss befindet sich gleichzeitig das Lösungsmittel, die organische Probe und auch die Base zum Verseifen der herausgelösten Fette. Es ist aber auch eine Filterextraktion durchführbar. Dazu wird die Probe in einem Filter im Extraktionsgefäss oberhalb des Lösungsmittels angebracht und durch das Lösungsmittel im Rückfluss gelöst. Die Zugabe der sauren Salzlösung zum Ansäuren der verseiften Fettanteile erfolgt ins Extraktionsgefäss. Die Zeit, die notwendig ist, um den Fettgehalt einer Probe zu bestimmen, wird durch dieses Verfahren wesentlich reduziert.

Die Erfindung wird im folgenden in einem Ausführungsbeispiel und anhand der Zeichnungen näher erläutert. Es zeigen:
- Figur 1: eine Darstellung eines Glassatzes eines Extraktors,
- Figuren 2a bis 2f: eine schematische Darstellung der Verfahrensschritte zum Bestimmen des Fettgehaltes,
- Figur 3: eine Darstellung eines Spektrums der gemessenen Fettsäuren, und
- Figuren 4a und 4b: eine schematische Darstellung zweier Verfahrensschritte bei Verwendung eines Filters.

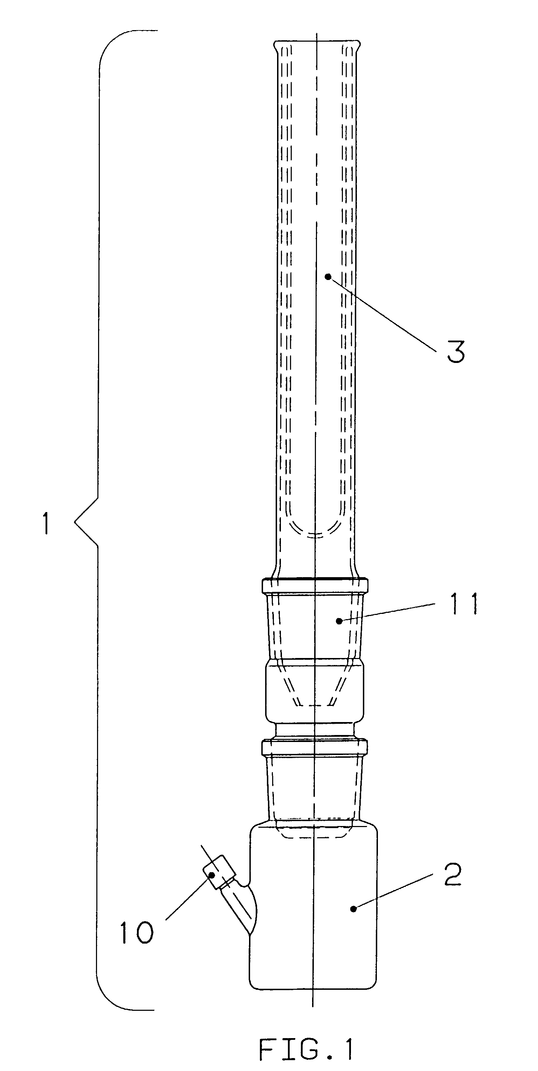

Figur 1 zeigt einen Glassatz eines Extraktors 1, wie er zum Extrahieren des Fettes aus einer organischen Probe verwendet werden kann. Der Extraktor 1 besteht aus einem Kühler 3, einem Zwischenstück 21 zur Aufnahme des Filters mit der Probe für die Filterextraktion, sowie aus dem Extraktionsgefäss 2 und einer Heizvorrichtung 11 zum Erhitzen des Lösungsmittels. In einem Glassatz zum Ausüben des erfindungsgemässen Verfahrens weist das Gefäss zur Aufnahme des Lösungsmittels und des extrahierten Materials zusätzlich einen Stutzen (10) zur Entnahme von Proben auf.

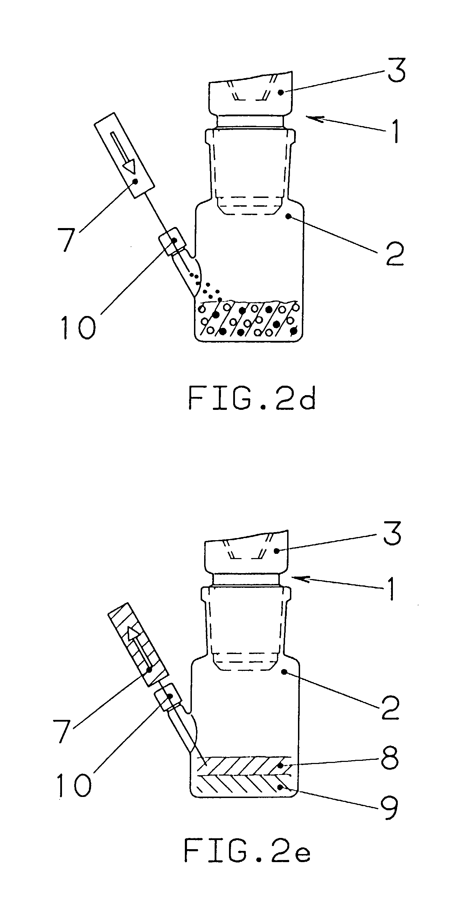

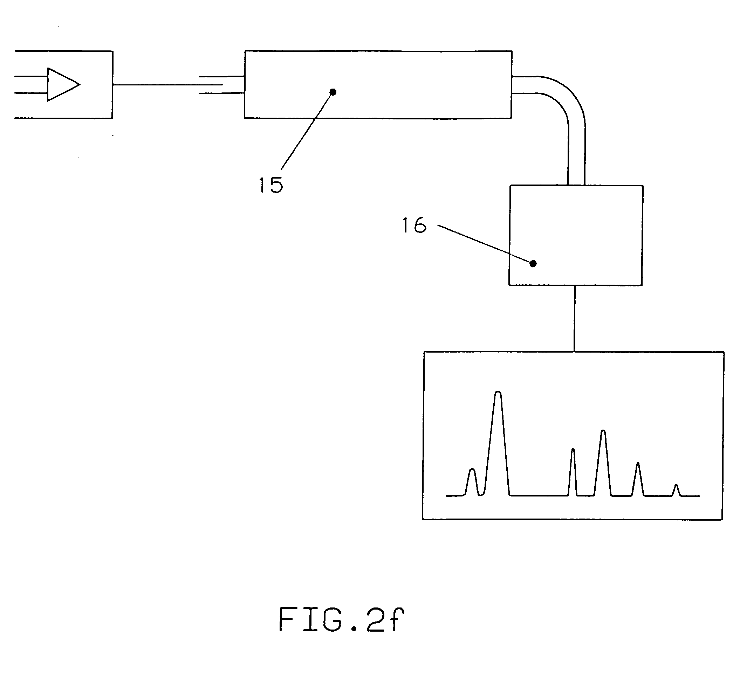

Figur 2a zeigt schematisch ein Lösungsmittelgefäss 2, in welches vorangehend eine Probe 4 sowie ein interner Standard 13 eingewogen wurden. Als Probe werden im allgemeinen Lebensmittel verwendet, deren Fettgehalt bestimmt werden soll. Der interne Standard 13 ist eine Fettsäure, welche in der Natur nicht vorkommt. Dies kann beispielsweise Tridekan- oder Valeriansäure sein. Der interne Standard 13 und die Probe 4 werden in das Lösungsmittelgefäss 2 eingewogen und anschliessend wird basisches Material 5 ebenfalls in das Lösungsmittelgefäss 2 eingewogen. Als Base eignet sich beispielsweise Kaliumhydroxyd (KOH).

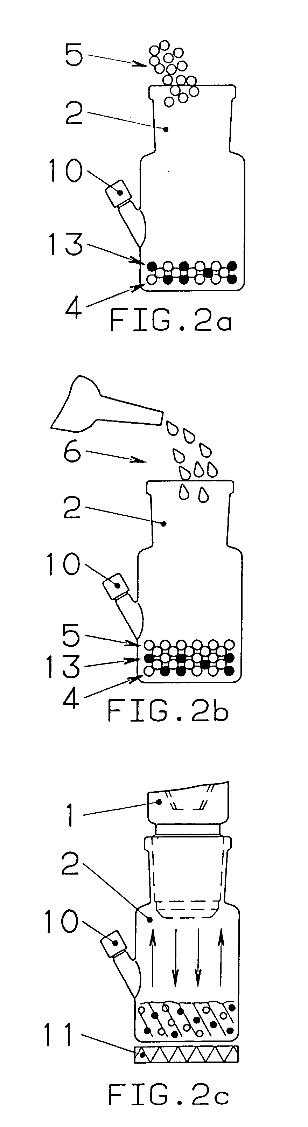

In einem nächsten Verfahrensschritt (siehe Figur 2b) wird ein hochsiedendes Lösungsmittel 6 in das Lösungsmittelgefäss 2 gegeben. Als hochsiedendes Lösungsmittel wird n-Butylalkohol verwendet. In einem typischen Verfahren werden 3 - 5 Gramm der Probe 4, 0,1 Gramm eines internen Standards 13, 1,5 Gramm einer Base 5 sowie 45 Milliliter eines Lösungsmittels 6 verwendet.

In Figur 2c ist schematisch dargestellt, wie das Lösungsmittelgefäss 2 durch eine Heizvorrichtung 11 erhitzt wird, wodurch das Lösungsmittel verdampft und die Fettanteile aus der Probe sowie den internen Standard auflöst. Bei der Verwendung von n-Butylalkohol verläuft diese Extraktion bei ca. 117°C (Siedepunkt des n-Butylalkohols). Im selben Verfahrensschritt werden die aus der Probe ausgelösten Fettanteile in einer Reaktion mit der Base 5 verseift.

Die Formeln der chemischen Reaktionen, die in diesem ersten Verfahrensschritt ablaufen, sind nachfolgend dargestellt. Als Fett in eigentlichem chemischen Sinne gelten Ester des dreiwertigen Alkohols Glycerin mit verschiedenen Fettsäuren. Durch die Reaktion mit der Base wird das Fett verseift, und es entstehen Glycerin und Salze der Fettsäuren.

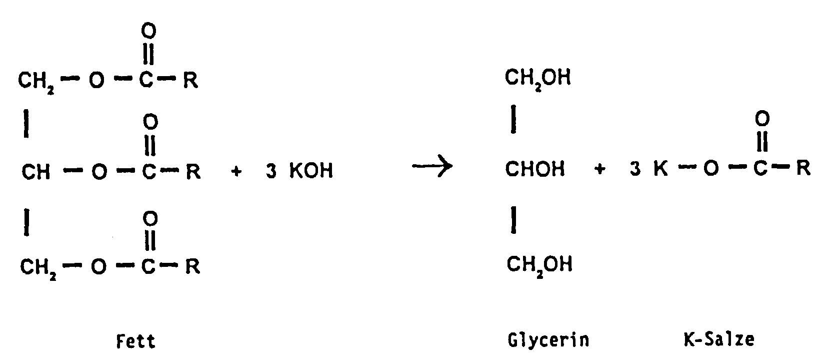

Nach Beenden der Extraktion wird, so lange das Lösungsmittel noch heiss ist, die Extraktionslösung durch Zugabe einer sauren Salzlösung angesäuert. Als saures Salz wird Natriumdihydrogenphosphat und Ameisensäure verwendet. Beim Verfahren mit den oben erwähnten typischen Werten werden 40 Milliliter einer Natriumdihydrogenphosphatlösung zugegeben. Durch die Zugabe dieser sauren Salzlösung werden die Salze der Fettsäuren in die entsprechenden Fettsäuren umgewandelt. Die chemische Reaktion die sich in diesem Verfahrensschritt abspielt, ist durch die nachfolgende chemische Formel charakterisiert.

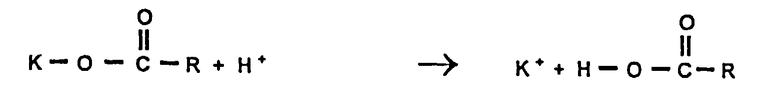

Durch die Zugabe der sauren Salzlösung entstehen im Extraktionsgefäss zwei Phasen. Eine organische Phase 8 befindet sich in dem oberen Teil des Lösungsmittelgefässes 2 und eine wässrige Phase 9 befindet sich auf dem Grund des Lösungsmittelgefässes 2. Aus der oberen Phase 8 wird nun eine Probe des Reaktionsprodukts entnommen.

Figur 2f zeigt schematisch wie die Probe des Reaktionsproduktes in einen Gas-Chromatographen eingegeben wird. Die verschiedenen Fettsäuren, die Lösungsmittelmoleküle sowie allfällige weitere Komponenten werden aufgrund ihrer unterschiedlichen molekularen Eigenschaften in einem Trennrohr 15 voneinander getrennt. Am Ausgang des Trennrohrs 15 werden die dort ankommenden Moleküle mit einem Flammenionisationsdetektor erfasst und in Form eines Chromatogramms aufgezeichnet. Das Spektrum zeigt die Menge von am Ende des Trennrohrs ankommenden Molekülen in Abhängigkeit der Zeit. Aufgrund der unterschiedlichen Durchlaufgeschwindigkeit von verschieden grossen Molekülen im Trennrohr 15 ist die Zeitachse bei homologen Verbindungen ein Mass für die Grösse der registrierten Moleküle.

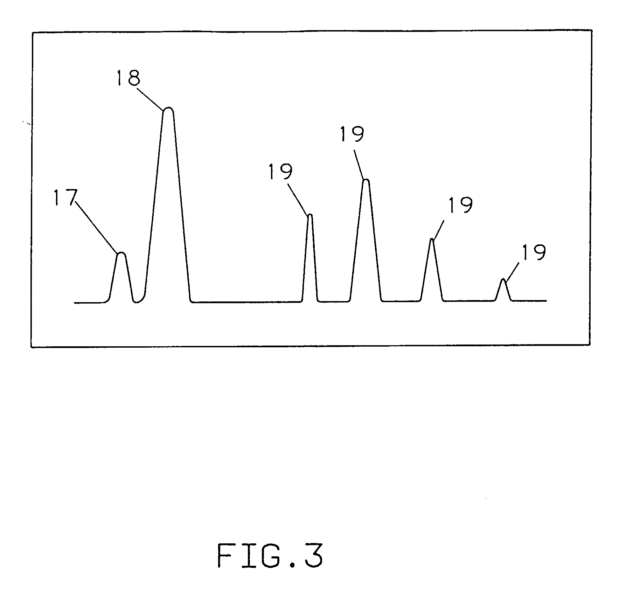

Figur 3 zeigt schematisch ein durch eine solche Trenn- und Analysemethode erhaltenes Chromatogramm. Während des Trennverfahrens werden die Moleküle des Lösungsmittels als erste registriert und ergeben einen Peak 17. Der interne Standard erzeugt einen Peak 18 und die verschiedenen Fettsäuren erzeugen weitere Peaks 19. Der Gesamtanteil an Fettsäuren der Probe ergibt sich durch die Summe aller Flächen 19. Zum quantitativen Bestimmen des Fettgehaltes wird diese Fläche mit der Fläche, die unter dem Peak 18 enthalten ist, der durch den internen Standard erzeugt wurde, verglichen. Ausgehend von der ursprünglich bekannten Menge des internen Standards kann auf die Gesamtmenge der Fettsäuren in der Probe 5 geschlossen werden.

Erfindungswesentlich ist, dass durch die Verwendung eines hochsiedenden Lösungsmittels die Gesamtheit aller Fettsäuren aus der Probe herausgelöst wurde und dass die zur Extraktion notwendige Zeitdauer reduziert wird. Die Zeit zur Durchführung des Messverfahrens wird zusätzlich dadurch reduziert, dass die Verseifung der herausgelösten Fettanteile bereits während der Extraktion erfolgt und dass für die Gesamtfettbestimmung keine Basislinientrennung für die Peaks 19 erforderlich ist.

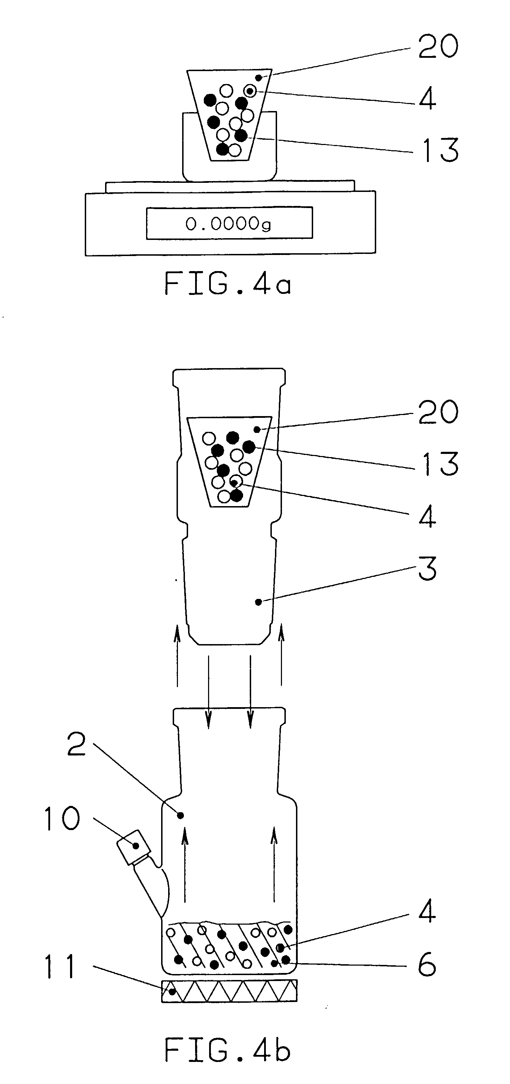

Anstatt dass die Probe 4 direkt in das Lösungsmittelgefäss 2 gegeben wird, kann auch ein Filter 20 zur Aufnahme der Probe 4 und des internen Standards 13 verwendet werden (siehe Figur 4a). Die Probe 4 und der interne Standard 13 werden in einen Filter 20 gewogen, welcher anschliessend in das Zwischenstück 11 des Extraktors 1 eingesetzt wird.

Figur 4b zeigt dabei die Phase des Filterextraktionsverfahrens, welche Figur 2c des Direktextraktionsverfahrens entspricht. Das Lösungsmittel 6 wird im Lösungsmittelbehälter 2 mit Hilfe einer Heizeinrichtung 11 erhitzt. Das erhitzte Lösungsmittel verdampft und löst den Fettanteil der im Filter 20 enthaltene Probe und den internen Standard heraus. Die Extraktionslösung mit den herausgelösten Fettanteilen tropft in das Lösungsmittelgefäss 2 zurück. Die weiteren Verfahrensschritte bei einer Filterextraktion sind analog zu in den Figur 2d bis 2g dargestellt.

## Patentansprüche

1. Verfahren zur Bestimmung des Fettgehaltes einer Probe (4), gekennzeichnet durch folgende Schritte:
a) Extrahieren des Fettanteils aus der Probe (4) mit einem Lösungsmittel, insbesondere einem hochsiedenden Lösungsmittel (6) bei einer Temperatur von mindestens 100°C, vorzugsweise 115°C bis 118°C,
b) gleichzeitiges Verseifen des extrahierten Fettanteils mit einer Base (5) und anschliessende Umwandlung in die entsprechenden Fettsäuren,
c) Analysieren einer Probe des so erhaltenen Reaktionsproduktes und Bestimmung des gesamten Gehalts an Fettsäuren der organischen Probe (5).

2. Verfahren zur Bestimmung des Fettgehaltes gemäss Anspruch 1, dadurch gekennzeichnet, dass nach dem Verseifen des herausgelösten Fettanteils ein saures Salz (7) dem Reaktionsprodukt zur Umwandlung in Fettsäuren beigefügt wird, so dass eine obere organische Phase (8) und eine untere wässrige Phase (9) gebildet werden.

3. Verfahren zur Bestimmung des Fettgehaltes nach einem der Ansprüche 1 oder 2, dadurch gekennzeichnet, dass das Reaktionsprodukt zum selektiven Analysieren in seine einzelnen Bestandteile aufgetrennt wird.

4. Verfahren zur Bestimmung des Fettgehaltes nach Anspruch 3, dadurch gekennzeichnet, dass die verschiedenen Bestandteile des Reaktionsprodukts gaschromatographisch aufgetrennt werden.

5. Verfahren zur Bestimmung des Fettgehaltes nach Anspruch 4, dadurch gekennzeichnet, dass ein gaschromatographisches Verfahren verwendet wird, bei dem eine kurze Trennsäule (15), vorzugsweise mit einer Länge von 30 cm, eingesetzt wird.

6. Verfahren zur Bestimmung des Fettgehaltes nach Anspruch 5, dadurch gekennzeichnet, dass zum Detektieren der durch Gas-Chromatographie aufgeteilten Bestandteile des Reaktionsproduktes ein Flammenionisationsdetektor (16) verwendet wird.

7. Verfahren zur Bestimmung des Fettgehaltes nach einem der Ansprüche 1 bis 6, dadurch gekennzeichnet, dass zum quantitativen Bestimmen des Fettgehaltes vor der Extraktion ein interner Standard (13) zur Probe (4) gegeben wird, und dass nach dem Bestimmen der verschiedenen Fettsäuren der Probe (4) aufgrund des internen Standards (13) die Menge aller Fettsäuren der Probe (4) bestimmt wird.

8. Verfahren zur Bestimmung des Fettgehaltes nach einem der Ansprüche 1 bis 7, dadurch gekennzeichnet, dass ein hochsiedendes, relativ polares Lösungsmittel verwendet wird.

9. Verfahren zur Bestimmung des Fettgehaltes nach einem der Ansprüche 1 bis 8, dadurch gekennzeichnet, dass als Base (5) zum Verseifen der aus der Probe (4) herausgelösten Fettanteile Kaliumhydroxid verwendet wird.

10. Verfahren zur Bestimmung des Fettgehaltes nach einem der Ansprüche 1 bis 7, dadurch gekennzeichnet, dass als hochsiedendes Lösungsmittel n-Butylalkohol verwendet wird.

11. Verfahren zur Bestimmung des Fettgehaltes nach einem der Ansprüche 1 bis 10, dadurch gekennzeichnet, dass als saure Salzlösung (7) zur Überführung der Fettsäuresalze in die freien Fettsäuren eine Lösung mit Natriumdihydrogenphosphat (NaH₂PO₄) und Ameisensäure verwendet wird.

12. Verfahren zur Bestimmung des Fettgehaltes nach einem der Ansprüche 1 bis 11, dadurch gekennzeichnet, dass zum Extrahieren der Fettanteile aus der Probe (4) ein Direktextraktionsverfahren angewandt wird.

13. Verfahren zur Bestimmung des Fettgehaltes nach einem der Ansprüche 1 bis 11, dadurch gekennzeichnet, dass zum Extrahieren der Fettanteile aus der Probe (4) ein Filterextraktionsverfahren angewandt wird.
